# EUROPÄISCHE PATENTSCHRIFT

(11) **EP 1 995 573 B1**
(45) Veröffentlichungstag und Bekanntmachung des Hinweises auf die Patenterteilung: **28.12.2011**
(21) Anmeldenummer: 08101996.0
(22) Anmeldetag: 26.02.2008
(51) Int. Cl.: G01F 23/284, H01P 1/10

(54) **Massekopplung an getakteten HF-Bauelementen**
Mass coupling at clocked HF-elements
Mise à la masse de composants électroniques synchronisés à haute fréquence

(30) Priorität: 23.05.2007 DE 102007023927; 23.05.2007 US 939647 P
(43) Veröffentlichungstag der Anmeldung: 26.11.2008
(73) Patentinhaber: VEGA Grieshaber KG, 77709 Wolfach (DE)
(72) Erfinder: Müller, Christoph, 77728, Oppenau (DE)
(74) Vertreter: Kopf, Korbinian Paul

(56) Entgegenhaltungen:
- US-A- 5 369 409
- US-A1- 2006 000 275

## Beschreibung

### Technisches Gebiet:

Die vorliegende Erfindung betrifft die Füllstandsmessung. Insbesondere betrifft die vorliegende Erfindung eine Schaltung für ein Füllstandsmessgerät zum schnellen Einschalten eines Hochfrequenz-Bauelements an einem Masse-Anschluss, ein Füllstandsmessgerät mit einer solchen Schaltung, die Verwendung einer derartigen Schaltung zur Füllstandsmessung und ein Verfahren zum schnellen Einschalten eines Hochfrequenz-Bauelements an einem Masse-Anschluss zur Füllstandsmessung.

### Hintergrund der Erfindung:

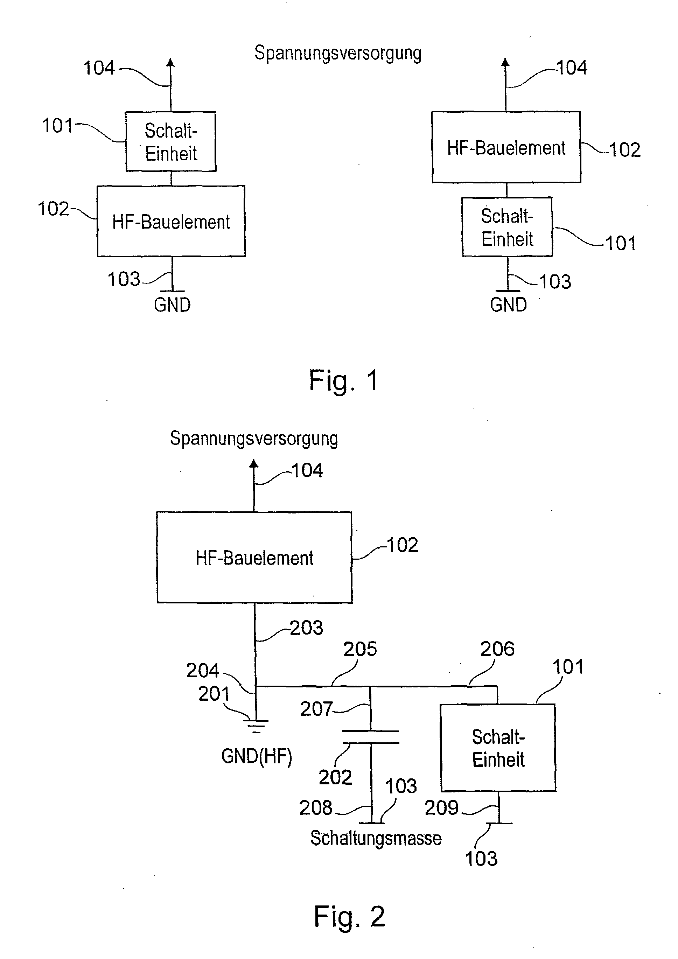

Möchte man Hochfrequenz-Bauelemente (HF-Bauelemente) kurzzeitig einschalten, so wird beim Fehlen eines geeigneten Steueranschlusses häufig die Betriebsspannung geschaltet. Hierbei sind unterschiedliche Varianten möglich, wie sie in Fig. 1 dargestellt sind. Hierbei handelt es sich um direktes Schalten der Betriebsspannung. Auch ist ein indirektes Schalten über einen Steuereingang (sog. Shut-Down) möglich.

Die Schalteinheit besteht bei schnellen Einschaltvorgängen beispielsweise aus einzelnen Transistoren, die entsprechend schnelle Schaltzeiten haben. Relais oder integrierte Schalter sind für zeitkritische Anwendungen in der Regel zu langsam.

Sitzt die Schalteinheit direkt an der Betriebsspannung des HF-Bauelements, so muss entweder über relativ langsame PNP-Transistoren geschaltet werden oder im Falle des Einsatzes von schnellen NPN-Transistoren für ausreichend Ansteuerpegel gesorgt werden.

Sitzt die Schalteinheit am Masse-Anschluss (GND-Port oder Ground-Port), so liegt sie bei HF-Bauelementen im sog. "heißen Pfad", d. h. sie geht mit in die HF-Eigenschaften der Anordnung bzw. des HF-Bauelements ein.

US 2006/0000275 A1 offenbart ein Füllstandradarsystem mit einem spannungsgesteuerten Verstärker und einem steuerbaren Schalter.

Es ist eine Aufgabe der vorliegenden Erfindung, ein einfaches; schnelles Ein- bzw. Ausschalten von HF-Bauelementen für die Füllstandsmessung zu ermöglichen.

### Darstellung der Erfindung:

Gemäß einem Ausführungsbeispiel der vorliegenden Erfindung ist eine Schaltung für ein Füllstandsmessgerät zum schnellen Einschalten eines Hochfrequenz-Bauelements an einem Masse-Anschluss angegeben, die Schaltung aufweisend eine Schalteinheit mit einem ersten Masse-Anschluss, ein Hochfrequenz-Bauelement mit einem zweiten Masse-Anschluss, ein Kopplungselement und eine Isolierung zwischen dem zweiten Masse-Anschluss und dem ersten Masse-Anschluss. Die Schalteinheit ist hierbei zwischen dem ersten Masse-Anschluss und dem Hochfrequenz-Bauelement angeschlossen, wobei der zweite Masse-Anschluss über das Kopplungselement an dem ersten Masse-Anschluss angekoppelt ist.

In anderen Worten kann die Schalteinheit am GND-Port des HF-Bauelements angeordnet sein, ohne dessen Hochfrequenz-Eigenschaften zu beeinflussen.

Dieses schnelle Einschalten ermöglicht den Einsatz der Schaltung (also der HF-Bauelemente) für Pulsradarmessungen oder auch zum Zwecke der Energieeinsparung (indem die HF-Bauelemente abgeschaltet werden, wenn sie aus Energiegründen nicht verwendet werden sollen).

Gemäß einem weiteren Ausführungsbeispiel der vorliegenden Erfindung sind das Kopplungselement und die Isolierung zwischen dem zweiten Masse-Anschluss und dem ersten Masse-Anschluss derart ausgeführt, dass ein Gleichstromfluss zwischen dem ersten Masse-Anschluss und dem Hochfrequenz-Bauelement verhindert wird.

Dieser Gleichstromfluss wird erst dann ermöglicht, wenn die Schalteinheit geschaltet wird, so dass ein Kurzschluss zwischen den beiden Masse-Anschlüssen hergestellt ist.

Es wird also im Bereich des HF-Bauelements, das eingeschaltet werden soll, eine neue Masse eingeführt, die gegenüber der Schaltungsmasse isoliert ist. Diese wiederum ist über das Kopplungselement (beispielsweise in Form einer Kapazität) an die Schaltungsmasse angekoppelt. Beim Einschalten des HF-Bauelements müssen nun lediglich die beiden Massepotentiale gleichspannungsmäßig (DC-mäßig) kurzgeschlossen werden, damit Strom fließen kann.

Gemäß einem weiteren Ausführungsbeispiel der vorliegenden Erfindung ist das Kopplungselement als Kondensator ausgeführt.

Gemäß einem weiteren Ausführungsbeispiel der vorliegenden Erfindung weist die Schaltung eine Platine auf, welche eine erste Lage, eine zweite Lage und eine dritte Lage umfasst, wobei das Kopplungselement als Plattenkondensator ausgeführt ist, der durch die zweite Lage und die dritte Lage gebildet wird.

Gemäß einem weiteren Ausführungsbeispiel der vorliegenden Erfindung weist die Schaltung eine Platine auf, welche eine erste Lage, eine zweite Lage und eine dritte Lage umfasst, wobei der Plattenkondensator durch die zweite Lage und die erste Lage gebildet wird.

Es ist zu beachten, dass das Kopplungselement auch auf andere Art ausgeführt sein kann. Wichtig ist lediglich, dass es einen Gleichstromfluss zwischen der Schaltungsmasse und der Hochfrequenz-Masse verhindern kann, wenn die Schalteinheit auf "offen" steht. Beispielsweise kann die dritte Lage ganz entfallen, wenn das Kopplungselement beispielsweise in der zweiten Lage integriert ist.

Gemäß einem weiteren Ausführungsbeispiel der vorliegenden Erfindung weist die Schaltung ebenfalls eine Platine mit drei Lagen auf, wobei aber das Kopplungselement als Koppelfläche in der dritten Lage ausgeführt ist. Das Kopplungselement wird also nicht durch die zweite und dritte Lage in Form eines Plattenkondensators ausgebildet.

Weiterhin kann, gemäß einem weiteren Ausführungsbeispiel der vorliegenden Erfindung, die Schaltung als Microstrip-Schaltung ausgeführt sein, wobei der zweite Masse-Anschluss als Fläche auf einer Unterseite der Platine ausgeführt ist.

Gemäß einem weiteren Ausführungsbeispiel der vorliegenden Erfindung weisen alle drei Lagen den ersten Masse-Anschluss (Schaltungsmasse) auf.

Gemäß einem weiteren Ausführungsbeispiel kann die Platine als Multilayer mit vielen Lagen aufgebaut sein, bei dem die Massekopplungen nur in einem Teilbereich stattfindet, d.h. nur in einem Teil der vielen Lagen.

Gemäß einem weiteren Ausführungsbeispiel kann die Kopplung der zwei Massen nur zwischen der ersten und zweiten Lage erfolgen.

Gemäß einem weiteren Ausführungsbeispiel der vorliegenden Erfindung weist die erste Lage das Hochfrequenz-Bauelement auf, wobei die zweite Lage eine isolierte Hochfrequenz-Massefläche aufweist, welche den zweiten Masse-Anschluss darstellt, und wobei die dritte Lage das Kopplungselement aufweist.

Gemäß einem weiteren Ausführungsbeispiel der vorliegenden Erfindung ist die Schalteinheit als ein Element, ausgewählt aus der Gruppe bestehend aus Halbleiter-Bauelementen wie beispielsweise Transistoren oder Dioden, Signalschalter und Relais, ausgeführt.

Gemäß einem weiteren Ausführungsbeispiel der vorliegenden Erfindung ist das Hochfrequenz-Bauelement als ein Element ausgewählt aus der Gruppe bestehend aus Oszillator, Sendeverstärker, rauscharmer Verstärker (Low Noise Amplifier, LNA), Variabel Gain Amplifier (VGA), Mischer und Vervielfacher ausgeführt.

Gemäß einem weiteren Ausführungsbeispiel der vorliegenden Erfindung ist ein Füllstandsmessgerät angegeben, welches eine Schaltung, wie oben beschrieben, aufweist.

Gemäß einem weiteren Ausführungsbeispiel der vorliegenden Erfindung ist die Verwendung einer solchen Schaltung zur Füllstandsmessung angegeben.

Gemäß einem weiteren Ausführungsbeispiel der vorliegenden Erfindung ist ein Verfahren zum schnellen Einschalten eines Hochfrequenz-Bauelements an einem Masse-Anschluss zur Füllstandsmessung angegeben, bei dem ein erster Masse-Anschluss an einer Schalteinheit bereitgestellt wird, ein zweiter Masse-Anschluss an einem Hochfrequenz-Bauelement bereitgestellt wird, wobei die Schalteinheit zwischen dem ersten Masse-Anschluss und dem Hochfrequenz-Bauelement angeschlossen ist, und bei dem eine Isolierung zwischen dem zweiten Masse-Anschluss und dem ersten Masse-Anschluss bereitgestellt wird. Weiterhin erfolgt ein Ankoppeln des zweiten Masse-Anschlusses über ein Kopplungselement an den ersten Masse-Anschluss.

In einem weiteren Verfahrensschritt werden die beiden Masse-Anschlüsse über eine Schalteinheit miteinander kurzgeschlossen, so dass das Hochfrequenz-Bauelement angeschaltet wird.

Es ist zu beachten, dass die im Hinblick auf die Schaltung beschriebenen Ausführungsbeispiele der Erfindung auch das Verfahren, die Verwendung und das Füllstandsmessgerät umfassen.

Weitere Ausführungsbeispiele und Vorteile der Erfindung ergeben sich aus den Unteransprüchen.

Im Folgenden werden mit Verweis auf die Figuren bevorzugte Ausführungsbeispiele der vorliegenden Erfindung beschrieben.

### Kurze Beschreibung der Zeichnungen:

Fig. 1 zeigt eine schematisierte Darstellung zweier Anordnungen von Schalteinheit und HF-Bauelement gemäß dem Stand der Technik.
Fig. 2 zeigt eine schematisierte Darstellung einer Schaltung gemäß einem Ausführungsbeispiel der vorliegenden Erfindung.
Fig. 3 zeigt eine schematisierte Darstellung eines Lagenaufbaus eines Mikrowellenprints.
Fig. 4 zeigt einen Mikrowellenprint aller drei Lagen eines Mikrowellenverstärkers gemäß einem Ausführungsbeispiel der vorliegenden Erfindung.
Fig. 5 zeigt einen Mikrowellenprint der ersten Lage 301 der Fig. 4.
Fig. 6 zeigt einen Mikrowellenprint der zweiten Lage 302 der Fig. 4.
Fig. 7 zeigt einen Mikrowellenprint der dritten Lage 303 der Fig. 4.
Fig. 8 zeigt ein Prinzip der Kopplung gemäß einem Ausführungsbeispiel der vorliegenden Erfindung.
Fig. 9 zeigt ein Füllstandsmessgerät gemäß einem Ausführungsbeispiel der vorliegenden Erfindung.

### Detaillierte Beschreibung von exemplarischen Ausführungsformen:

Die Darstellungen in den Figuren sind schematisch und nicht maßstäblich.

In der folgenden Figurenbeschreibung werden für die gleichen oder ähnlichen Elemente die gleichen Bezugsziffern verwendet.

Fig. 1 zeigt zwei Schaltungen zum Schalten von HF-Bauelementen gemäß dem Stand der Technik. In der linken Ausführung ist das HF-Bauelement 102 auf der einen Seite an die Erde (Masse-Anschluss GND) 103 angeschlossen. Auf der anderen Seite ist das HF-Bauelement 102 mit einer Schalteinheit 101 verbunden, welche ihrerseits Verbindung zu einer Spannungsversorgung 104 bereitstellt.

Bei der rechten Ausführungsform befindet sich die Schalteinheit 101 zwischen der Masse 103 und dem HF-Bauelement 102, welches andererseits mit der Spannungsversorgung 104 verbunden ist.

Im linken Beispiel wird entweder über relativ langsame PNP-Transistoren geschaltet oder im Falle des Einsatzes von schnellen NPN-Transistoren für ausreichend Ansteuerpegel gesorgt.

Im rechten Fall liegt die Schalteinheit bei HF-Bauelementen im sog. "heißen Pfad", d. h. sie geht mit in die HF-Eigenschaften der Anordnung bzw. des HF-Bauelements mit ein.

Fig. 2 zeigt eine Schaltung gemäß einem Ausführungsbeispiel der vorliegenden Erfindung. Das HF-Bauelement 102 ist auf der einen Seite mit einer Spannungsversorgung 104 verbunden und auf der anderen Seite (bzw. über einen weiteren Anschluss) ist das HF-Bauelement 102 über die Leitungen 203, 204 mit einer Hochfrequenz-Masse 201 verbunden.

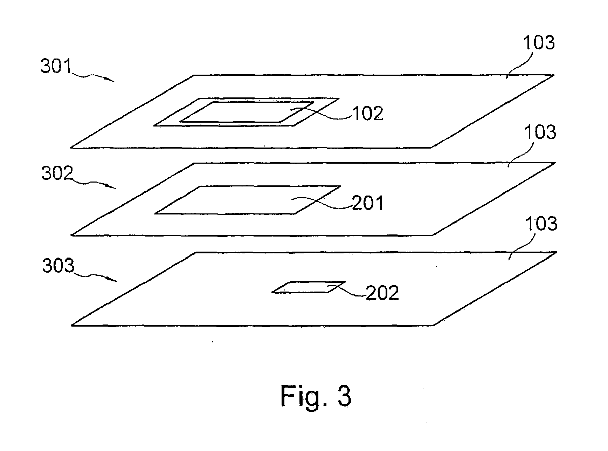

Die Hochfrequenz-Masse 201 befindet sich beispielsweise in einer Platine in einer zweiten Lage, welche sich zwischen der ersten Lage mit dem HF-Bauelement 102 und der dritten Lage mit dem Kopplungselement 202 befindet (siehe Fig. 3).

Die Hochfrequenz-Masse 201 des HF-Bauelements 102 ist über die Leitungen 205, 207 mit dem Kopplungselement 202 verbunden, welches seinerseits wiederum über die Leitung 208 mit der Schaltungsmasse 103 verbunden ist.

Weiterhin ist die Hochfrequenz-Masse 201 über die Leitungen 205, 206 mit der Schalteinheit 101 verbunden, die ihrerseits über die Leitung 209 mit der Schaltungsmasse 103 verbunden ist.

Aus Sicht der Hochfrequenz sind die beiden Massen 201, 103 identisch. Gleichstrom kann allerdings erst dann fließen, wenn durch die Schalteinheit 101 die beiden Massen 201, 103 miteinander kurzgeschlossen werden.

Im Falle von Microstrip-Schaltungen ist die Hochfrequenz-Masse 201 beispielsweise als Fläche auf der Platinenunterseite ausgeführt. Das Kopplungselement 202 (beispielsweise ein Kondensator zwischen den beiden Massenpotentialen 201, 103) kann durch eine gezielte Kopplung in einer weiteren Innenlage, die möglichst sehr nahe bei der HF-Massenlage liegt, realisiert werden.

Fig. 3 zeigt eine schematische Darstellung eines Lagenaufbaus eines Mikrowellenprints gemäß einem Ausführungsbeispiel der vorliegenden Erfindung. Es sind eine erste Lage 301, eine zweite Lage 302 und eine dritte Lage 303 vorgesehen. Alle drei Lage beinhalten die Schaltungsmasse 103. In der ersten Lage 301 befindet sich das zu schaltende Hochfrequenz-Bauelement 102, ggf. zusammen mit weiteren Microstrip-Schaltungselementen (nicht dargestellt in Fig. 3). In der zweiten Lage 302 befindet sich dann eine isolierte HF-Massefläche 201, welche dem HF-Bauelement 102 der ersten Lage 301 zugehört. In der dritten Lage 303 befindet sich das Koppelelement 202, welches wiederum isoliert zur Schaltungsmasse 103 die Verkopplung zwischen der Schaltungsmasse 103 und der HF-Masse 201 des HF-Bauelements 102 bereitstellt. Prinzipiell ergeben sich durch die Platine Plattenkondensatoren zwischen dem Koppelement 202 und der Massefläche 201 sowie der Schaltungsmasse 103.

Die Gestaltung der Schaltungsmassenflächen 103, 201 in den drei Lagen 301, 302, 303 ist variabel, kann also auch auf andere Weise ausgeführt sein. Ebenso ist die Ausgestaltung des Koppelelements in der dritten Lage 303 variabel. Hier gibt es verschiedene Ausführungsformen.

Die Kopplung der verschiedenen Massen kann auf unterschiedliche Art ausgeführt sein: Beispielsweise kann die Kopplung in der beschriebenen Art als Koppelfläche 202 in der dritten Lage 303 ausgeführt sein. Weiterhin kann die dritte Lage 303 auch flächig als Schaltungsmasse ausgeführt sein, wobei dann die Kopplung durch den entstehenden Plattenkondensator zwischen der zweiten Lage 302 und der dritten Lage 303 realisiert wird.

Beispielsweise kann die Kopplung auch durch einen entstehenden Plattenkondensator zwischen der zweiten Lage 302 und der ersten Lage 301 realisiert werden. Die dritte Lage 303 wäre in einem solchen Fall ohne Funktion.

Die Schalteinheit 101 kann ebenfalls unterschiedlich ausgeführt sein. Beispielsweise kann die Schalteinheit 101 als Transistor, als Diode, als Signalschalter oder als Relais ausgeführt sein. Auch eine Anordnung des Schalters ist auf verschiedene Weise möglich, da er ja nicht im sog. "heißen Pfad" angeordnet ist.

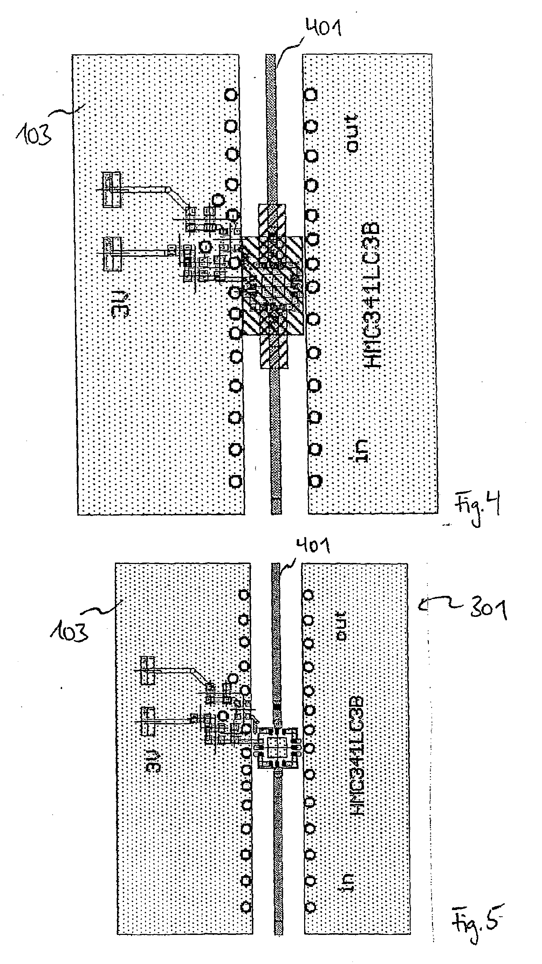

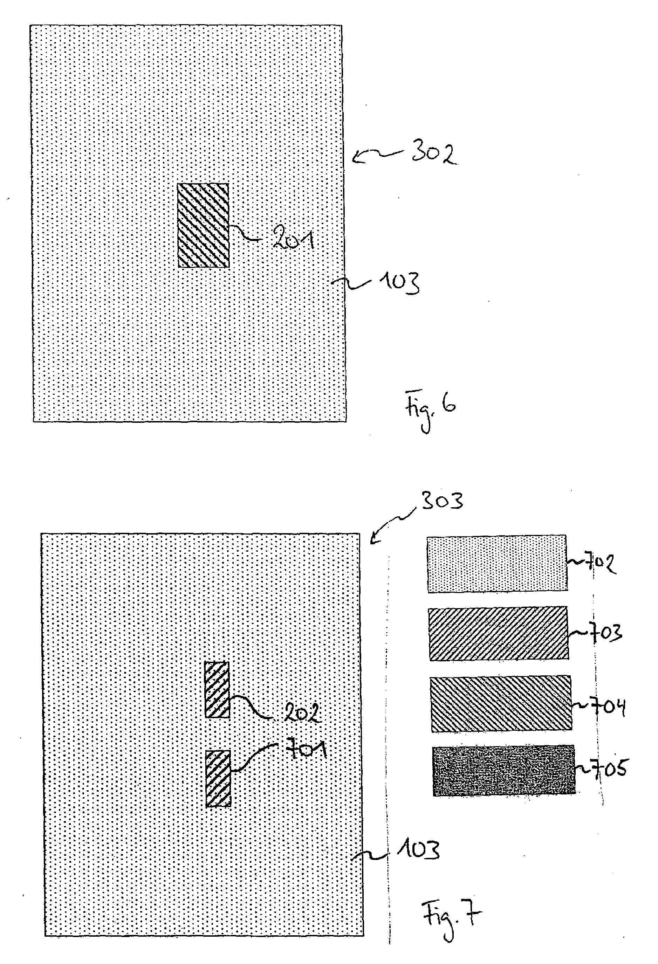

Fig. 4 zeigt einen Mikrowellenprint aller drei Lagen 301, 302, 303 eines Mikrowellenverstärkers gemäß einem Ausführungsbeispiel der vorliegenden Erfindung. Der Mikrowellenverstärker umfasst ein Hochfrequenz-Layout (Hochfrequenz-Bauelement) 401, welches in der durch das Farbfeld 705 der Fig. 7 definierten Musterung dargestellt ist. Weiterhin ist das Koppelelement der dritten Lage in der durch das Farbfeld 703 der Fig. 7 definierten Musterung dargestellt. Die isolierte Massefläche der zweiten Lage ist in der durch das Farbfeld 704 der Fig. 7 definierten Musterung dargestellt. Die Schaltungsmasse ist in der durch das Farbfeld 702 der Fig. 7 definierten Musterung dargestellt.

Fig. 5 zeigt einen Mikrowellenprint der ersten Lage 301 des Mikrowellenverstärkers der Fig. 4 mit dem Hochfrequenz-Layout (Hochfrequenz-Bauelement) 401.

Fig. 6 zeigt einen Mikrowellenprint der zweiten Lage 302 des Mikrowellenverstärkers der Fig. 4. In der zweiten Lage 302 befindet sich die isolierte HF-Massefläche 201, welche dem HF-Bauelement 102 der ersten Lage 301 zugehört.

Fig. 7 zeigt einen Mikrowellenprint der dritten Lage 303 des Mikrowellenverstärkers der Fig. 4. In der dritten Lage 303 befindet sich die Koppelelemente 202 und 701, welche die Verkopplung zwischen der Schaltungsmasse 103 und der HF-Masse 201 des HF-Bauelements 102 bereitstellen.

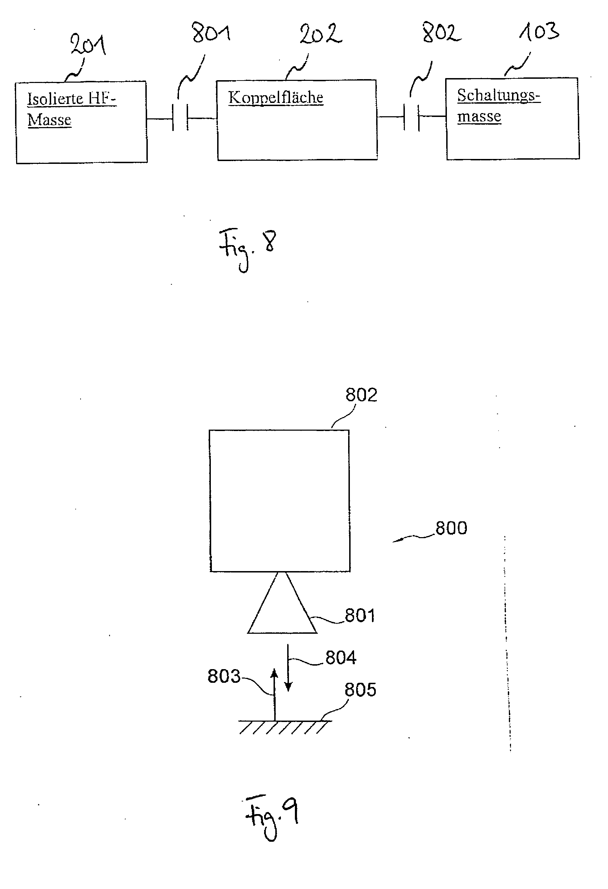

Fig. 8 zeigt ein Prinzip der Kopplung gemäß einem Ausführungsbeispiel der vorliegenden Erfindung. Die als Kondensatoren dargestellten Elemente 801, 802 stehen für die entstehenden Plattenkondensatoren zwischen den einzelnen Platinenlagen.

Die Koppelfläche (Koppelelement) 202 selbst kann auch entfallen - dann sind die isolierte HF-Masse 201 und die Schaltungsmasse 103 nur durch einen einzigen Plattenkondensator verbunden.

Das gezeichnete Prinzip gilt nicht nur für Platinenaufbauten.

Die Erfindung betrifft insbesondere den Einsatz der Schaltung in Füllstandsmessgeräten. Bei den zu schaltenden HF-Bauelementen handelt es sich beispielsweise um Oszillatoren, Sendeverstärker, LNA, Mischer, Vervielfacher, bzw. ganz allgemein um alle aktiven Bauelemente der HF-Technik.

Fig. 9 zeigt eine schematische Darstellung eines Füllstandsmessgeräts in Form eines Füllstandsradars gemäß einem Ausführungsbeispiel der vorliegenden Erfindung. Das Füllstandsradar 800 weist eine Antenne 801 und ein Gehäuse 802 auf. Das Gehäuse 802 beinhaltet die oben beschriebene Schaltung.

Die Antenne 801 sendet elektromagnetische Wellen 804 aus, welche von der Füllgutoberfläche 805 als Signal 803 reflektiert werden. Das reflektierte Signal 803 wird nachfolgend von der Antenne 801 aufgenommen und von der im Gehäuse befindlichen Elektronik ausgewertet.

Ergänzend sei darauf hinzuweisen, dass "umfassend" und "aufweisend" keine anderen Elemente oder Schritte ausschließen und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Schaltung für ein Füllstandsmessgerät zum schnellen Einschalten eines Hochfrequenz-Bauelements an einem Masse-Anschluss, die Schaltung aufweisend:
eine Schalteinheit mit einem ersten Masse-Anschluss;
ein Hochfrequenz-Bauelement mit einem zweiten Masse-Anschluss, der als HF-Masse-Anschluss ausgeführt ist;
ein Kopplungselement;
eine Isolierung zwischen dem zweiten Masse-Anschluss und dem ersten Masse-Anschluss;
wobei die Schalteinheit zwischen dem ersten Masse-Anschluss und dem Hochfrequenz-Bauelement angeschlossen ist; und
wobei der zweite Masse-Anschluss über das Kopplungselement an den ersten Masse-Anschluss HF-technisch angekoppelt ist.

2. Schaltung nach Anspruch 1,
wobei das Kopplungselement und die Isolierung zwischen dem zweiten Masse-Anschluss und dem ersten Masse-Anschluss derart ausgeführt sind, dass ein Gleichstromfluss zwischen dem ersten Masse-Anschluss und dem Hochfrequenz-Bauelement verhindert wird.

3. Schaltung nach Anspruch 1 oder 2,
wobei das Kopplungselement als Kondensator ausgeführt ist.

4. Schaltung nach Anspruch 3,
wobei die Schaltung eine Platine mit einer erste, einer zweite und einer dritte Lage aufweist; und
wobei das Kopplungselement als Plattenkondensator ausgeführt ist, der durch die zweite und dritte Lage gebildet wird.

5. Schaltung nach Anspruch 3,
wobei die Schaltung eine Platine mit einer erste, einer zweite und einer dritte Lage aufweist; und
wobei das Kopplungselement als Koppelfläche in der dritten Lage ausgeführt ist.

6. Schaltung nach einem der vorhergehenden Ansprüche,
wobei die Schaltung als Microstrip-Schaltung ausgeführt ist; und
wobei der zweite Masse-Anschluss als Fläche auf einer Unterseite der Platine ausgeführt ist.

7. Schaltung nach einem der Ansprüche 5 oder 6,
wobei alle drei Lagen den ersten Masse-Anschluss aufweisen.

8. Schaltung nach einem der vorhergehenden Ansprüche,
wobei die erste Lage das Hochfrequenz-Bauelement aufweiset;
wobei die zweite Lage eine isolierte Hochfrequenz-Massefläche aufweist, welche den zweiten Masse-Anschluss darstellt; und
wobei die dritte Lage das Kopplungselement aufweist.

9. Schaltung nach einem der vorhergehenden Ansprüche,
wobei die Schalteinheit als ein Element ausgewählt aus der Gruppe bestehend aus Transistor, Diode, Signalschalter, und Relais ausgeführt ist.

10. Schaltung nach einem der vorhergehenden Ansprüche,
wobei das Hochfrequenz-Bauelement als ein Element ausgewählt aus der Gruppe bestehend aus Oszillator, Sendeverstärker, rauscharmer Verstärker, Mischer, und Vervielfacher ausgeführt ist.

11. Füllstandsmessgerät, aufweisend eine Schaltung nach einem der Ansprüche 1 bis 10.

12. Verwendung einer Schaltung nach einem der Ansprüche 1 bis 10 zur Füllstandsmessung.

## Claims

1. A circuit for a fill-level measuring device for quickly switching on a high-frequency component on a ground connection, with the circuit comprising:
a switching unit comprising a first ground connection;
a high-frequency component comprising a second ground connection that is designed as an HF ground connection;
a coupling element;
insulation between the second ground connection and the first ground connection;
wherein the switching unit is connected between the first ground connection and the high-frequency component; and
wherein by way of the coupling element the second ground connection is connected to the first ground connection with the use of HF technology.

2. The circuit according to claim 1,
wherein the coupling element and the insulation between the second ground connection and the first ground connection are designed in such a manner that a direct-current flow between the first ground connection and the high-frequency component is prevented.

3. The circuit according to claim 1 or 2,
wherein the coupling element is designed as a capacitor.

4. The circuit according to claim 3,
wherein the circuit comprises a printed circuit board comprising a first, a second, and a third layer; and wherein the coupling element is designed as a plate capacitor that is formed by the second and third layers.

5. The circuit according to claim 3,
wherein the circuit comprises a printed circuit board comprising a first, a second, and a third layer; and wherein the coupling element is designed as a coupling surface in the third layer.

6. The circuit according to any one of the preceding claims,
wherein the circuit is designed as a microstrip circuit; and
wherein the second ground connection is designed as a surface on an underside of the printed circuit board.

7. The circuit according to one of claims 5 or 6,
wherein all three layers comprise the first ground connection.

8. The circuit according to any one of the preceding claims,
wherein the first layer comprises the high-frequency component;
wherein the second layer comprises an insulated high-frequency ground surface that represents the second ground connection; and
wherein the third layer comprises the coupling element.

9. The circuit according to any one of the preceding claims,
wherein the circuit unit is designed as an element selected from the group comprising a transistor, a diode, a signal switch, and a relay.

10. The circuit according to any one of the preceding claims,
wherein the high-frequency component is designed as an element selected from the group comprising an oscillator, a transmission amplifier, a low-noise amplifier, a mixer, and a multiplier.

11. A fill-level measuring device comprising a circuit according to any one of claims 1 to 10.

12. The use of a circuit according to any one of claims 1 to 10 for fill-level measuring.

## Revendications

1. Montage pour un appareil de mesure de niveau destiné à la connexion rapide d'un composant électronique à haute fréquence à un raccord de mise à la masse, le montage comprenant :
une unité de commutation avec un premier raccord de mise à la masse ;
un composant électronique à haute fréquence avec un second raccord de mise à la masse, réalisé sous forme de raccord HF ;
un élément de couplage ;
une isolation entre le second raccord de mise à la masse et le premier raccord de mise à la masse ;
l'unité de commutation étant raccordée entre le premier raccord de mise à la masse et le composant électronique à haute fréquence ; et
le second raccord de mise à la masse étant couplé en technique HF, par l'intermédiaire de l'élément de couplage, au premier raccord de mise à la masse.

2. Montage selon la revendication 1, dans lequel l'élément de couplage et l'isolation entre le second raccord de mise à la masse et le premier raccord de mise à la masse sont réalisés de telle sorte qu'un flux de courant continu est inhibé entre le premier raccord de mise à la masse et le composant électronique à haute fréquence.

3. Montage selon l'une des revendications 1 ou 2, dans lequel l'élément de couplage est réalisé sous forme d'un condensateur.

4. Montage selon la revendication 3, dans lequel
le montage présente une platine avec une première, une deuxième et une troisième couche; et
l'élément de couplage est réalisé sous forme de condensateur à lames, forme par la deuxième et par la troisième couche.

5. Montage selon la revendication 3, dans lequel
le montage présente une platine avec une première, une deuxième et une troisième couche ; et
l'élément de couplage est réalisé sous forme de surface de couplage dans la troisième couche.

6. Montage selon l'une des revendications précédentes, dans lequel
le montage est réalisé sous forme de circuit à microlames ; et
le second raccord de mise à la masse est réalisé sous forme de surface sur un côté inférieur de la platine.

7. Montage selon l'une des revendications 5 ou 6, dans lequel les trois couches présentent le premier raccord de mise à la masse.

8. Montage selon l'une des revendications précédentes, dans lequel
la première couche présente le composant électronique à haute fréquence ;
la deuxième couche présente une surface de mise à la masse isolée à haute fréquence, qui constitue le second raccord de mise à la masse ; et
la troisième couche présente l'élément de couplage.

9. Montage selon l'une des revendications précédentes, dans lequel l'unité de commutation est réalisée sous forme d'un élément sélectionné parmi le groupe constitué d'un transistor, d'une diode, d'un commutateur de signal et d'un relais.

10. Montage selon l'une des revendications précédentes, dans lequel le composant électronique à haute fréquence est réalisé sous forme d'un élément sélectionné parmi le groupe constitué d'un oscillateur, d'un amplificateur d'émission, d'un amplificateur à faible bruit, d'un mélangeur et d'un multiplicateur.

11. Appareil de mesure de niveau, présentant un montage selon l'une des revendications 1 à 10.

12. Utilisation d'un montage selon l'une des revendications 1 à 10 pour la mesure de niveau.
